# EUROPÄISCHE PATENTSCHRIFT

(11) **EP 2 572 262 B1**
(45) Veröffentlichungstag und Bekanntmachung des Hinweises auf die Patenterteilung: **12.09.2018**
(21) Anmeldenummer: 11717504.2
(22) Anmeldetag: 30.04.2011
(51) Int. Cl.: B60K 35/00, G06F 3/0485, G06F 3/0488, B60K 37/06, G11B 27/34

(54) **VERFAHREN UND VORRICHTUNG ZUM BEREITSTELLEN EINER BENUTZERSCHNITTSTELLE**
METHOD AND DEVICE FOR PROVIDING A USER INTERFACE
PROCÉDÉ ET DISPOSITIF DE PRODUCTION D'UNE INTERFACE UTILISATEUR

(30) Priorität: 18.05.2010 DE 102010020895
(43) Veröffentlichungstag der Anmeldung: 27.03.2013
(73) Patentinhaber: Volkswagen Aktiengesellschaft, 38440 Wolfsburg (DE)
(72) Erfinder: DEHMANN, Rainer, 10961 Berlin (DE)
(86) Internationale Anmeldenummer: PCT/EP2011/002161
(87) Internationale Veröffentlichungsnummer: WO 2011/144294

(56) Entgegenhaltungen:
- WO-A1-2009/106917
- WO-A2-2007/048694
- US-A1- 2008 126 989
- US-A1- 2010 146 435
- US-A1- 2010 251 165
- Microsoft Corporation: "PowerPoint 2003 Help and How-to", http://office.microsoft.com/en-us/?CTT=97 , 31. Dezember 2003 (2003-12-31), XP000002658481, Gefunden im Internet: URL:http://office.microsoft.com/en-us/powe rpoint-help/CL010072915.aspx [gefunden am 2011-09-08]

## Beschreibung

Die vorliegende Erfindung betrifft ein Verfahren zum Bereitstellen einer Benutzerschnittstelle, bei dem eine echte Teilmenge einer Menge mit einer Vielzahl von Objekten mittels einer Steuervorrichtung von einer Anzeigeeinrichtung anzeigbar ist. Bei dem Verfahren wird ein graphisches Objekt angezeigt, mittels welchem durch die relative Position eines ersten graphischen Teilelements zu einem zweiten graphischen Teilelement dargestellt wird, welche Teilmenge momentan angezeigt wird. Ferner wird bei dem erfindungsgemäßen Verfahren mittels eines Bedienvorgangs die angezeigte Teilmenge verändert. Dabei sind die Objekte in *n* disjunkte Teilmengen unterteilt, wobei *n* eine natürliche Zahl ist, die größer als 2 ist. Ferner sind relativ zu dem zweiten graphischen Teilelement *n* Positionen definiert. Das erste graphische Teilelement wird nur bei einer dieser *n* Positionen angezeigt, wenn kein Bedienvorgang zum Verändern der Teilmenge ausgeführt wird. Die Positionierung des ersten graphischen Teilelements auf einer der *n* Positionen stellt dann dar, welche der *n* Teilmengen momentan angezeigt wird. Des Weiteren betrifft die Erfindung eine Vorrichtung zum Bereitstellen einer Benutzerschnittstelle mit einer Anzeigeeinrichtung und einer Steuervorrichtung zum Steuern der Anzeige der Anzeigeeinrichtung. Mittels der Steuervorrichtung ist eine echte Teilmenge einer Menge mit einer Vielzahl von Objekten anzeigbar. Ferner ist ein graphisches Element anzeigbar, mittels welchem durch die relative Position eines ersten graphischen Teilelements zu einem zweiten graphischen Teilelement dargestellt wird, welche Teilmenge momentan angezeigt wird. Die Vorrichtung umfasst des Weiteren eine Eingabeeinrichtung, mittels welcher ein Bedienvorgang ausführbar ist, der die angezeigte Teilmenge verändert.

Das erfindungsgemäße Verfahren und die erfindungsgemäße Vorrichtung werden insbesondere in einem Fahrzeug, z. B. in einem Kraftfahrzeug, eingesetzt. Sie sind jedoch nicht auf diesen Einsatz beschränkt. Vielmehr lassen sich die Vorrichtung und das Verfahren in beliebigen Geräten, insbesondere tragbaren Geräten, wie einem Musikspieler, einem Mobiltelefon oder einem mobilen Navigationssystem einsetzen.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

Als weitere Anzeigeeinrichtung besitzt ein Fahrzeug häufig eine Multifunktionsanzeige in der Mittelkonsole oder oberhalb der Mittelkonsole, der ein Bedienelement zugeordnet ist. Ein solches Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Bei der Anzeige von Informationen in einem Kraftfahrzeug ergeben sich sehr spezielle Anforderungen an die Struktur der Anzeige. Die Informationen müssen nämlich so angezeigt werden, dass die Informationsaufnahme auch einfach und intuitiv durch den Fahrer des Kraftfahrzeugs erfolgen kann. Insbesondere sollte die Informationsaufnahme durch den Fahrer nicht zu einer Ablenkung während der Fahrt führen.

Aus der DE 10 2007 039 442 A1 ist ein Verfahren zum Anzeigen von Informationen in einem Kraftfahrzeug bekannt, bei dem graphische Objekte auf einem virtuellen, perspektivisch dargestellten Ring angeordnet dargestellt werden und bei dem auf eine Eingabe eines Nutzers die Graphikdaten so verändert werden, dass sich die Objekte auf dem virtuellen Ring karussellartig drehen.

Wenn eine Benutzerschnittstelle in Verbindung mit einem Gerät zur Verfügung gestellt werden soll, welches eine relativ kleine Anzeigefläche umfasst, ergibt sich das Problem, dass es nicht möglich ist, für eine Menge mit einer Vielzahl von Objekten, graphische Symbole für jedes Objekt auf der Anzeigefläche darzustellen. In einem solchen Fall wird daher nur eine Teilmenge einer solchen eine Liste bildenden Menge angezeigt. Der Nutzer kann durch einen Bedienvorgang einen Bildlauf (Scrollen) in der Liste erzeugen. Damit der Nutzer sich innerhalb der Gesamtmenge bzw. der Liste besser orientieren kann, ist es bekannt, ergänzend ein graphisches Element anzuzeigen, welches visualisiert, was für eine Teilmenge innerhalb der Gesamtmenge momentan angezeigt wird. Ein solches graphisches Element ist beispielsweise eine Bildlaufleiste, bei der eine Leiste oder ein Balken die Gesamtmenge repräsentiert und eine Markierung zum einen eine Position der momentan angezeigten Teilmenge innerhalb der Gesamtmenge visualisiert und zum andern die Größe der angezeigten Teilmenge relativ zur Gesamtmenge visualisiert. Eine solche Bildlaufleiste kann auch als Schaltfläche ausgebildet sein, so dass der Nutzer durch eine Cursorsteuerung oder über eine berührungsempfindliche Oberfläche auf der Anzeigefläche die anzuzeigende Teilmenge mittels der Bildlaufleiste auswählen kann.

Aus der WO 2007/048694 A2 ist ein Verfahren zum Navigieren durch einen Anzeigeinhalt bekannt. Wird eine Markierung in einer Bildlaufleiste bewegt, ändert sich der Anzeigeinhalt in einem Anzeigefenster entsprechend.

Aus der WO 2009/106917 A1 ist eine Benutzerschnittstelle für elektronische Geräte bekannt, welche eine anpassbare Bildlaufleiste aufweist, um einem Nutzer eine relative Position der angezeigten Daten in den Bezug zu anderen Daten, welche in einem Speicher abgespeichert sind, zu stellen. Die Bildlaufleiste kann die relative Position in horizontaler wie auch vertikaler Richtung andeuten.

Aus der US 2008/0126989 A1 ist ein Verfahren zum Navigieren durch einen Zeitplan bekannt. Dazu wird eine Zeitskala angezeigt. Die Zeitskala umfasst einen Schieber. Durch die Position des Schiebers auf der Zeitskala wird der angezeigte Zeitplan bestimmt.

Eine herkömmliche Bildlaufleiste ermöglicht es zwar die anzuzeigende Teilmenge beliebig innerhalb einer geordneten Gesamtmenge von Objekten auszuwählen. Eine solche herkömmliche Bildlaufleiste ist ebenso aus Programmen zur Präsentationserstellung oder ähnlichen Büroanwendungen wie beispielsweise Microsoft PowerPoint 2003 (XP002658481) bekannt. Dabei kann mittels einer Bildlaufleiste durch vorhandene Folien oder Seiten geblättert werden. Wenn jedoch das Verfahren bzw. die Vorrichtung in einer Umgebung eingesetzt wird, bei der es wichtig ist, dass ein Bedienvorgang schnell ausgeführt werden kann und der Bedienvorgang so wenig Aufmerksamkeit vom Nutzer wie möglich in Anspruch nehmen soll, ist eine Anpassung des Verfahrens bzw. der Vorrichtung an diese Bedingungen wünschenswert. Insbesondere beim Einsatz in einem Fahrzeug sollte das Verfahren bzw. die Vorrichtung an die speziellen Erfordernisse bei diesem Einsatz angepasst werden.

Der vorliegenden Erfindung liegt daher die Aufgabe zugrunde, ein Verfahren und eine Vorrichtung der eingangs genannten Art anzugeben, bei denen zum einen die angezeigte Teilmenge schnell und intuitiv verändert werden kann und zum anderen die Orientierung innerhalb der Gesamtmenge vereinfacht wird.

Erfindungsgemäß wird diese Aufgabe durch ein Verfahren mit dem Merkmal des Anspruchs 1 und eine Vorrichtung mit den Merkmalen des Anspruchs 5 gelöst. Vorteilhafte Ausgestaltungen und Weiterbildungen ergeben sich aus den abhängigen Ansprüchen.

Das graphische Element mit den beiden graphischen Teilelementen entspricht hinsichtlich seiner Funktion somit einer herkömmlichen Bildlaufleiste. Die Bildlaufleiste ist jedoch in *n* Positionen unterteilt, die den *n* disjunkten Teilmengen der Gesamtmenge der Objekte entspricht. Die Gesamtmenge wird somit fest in *n* Teilmengen unterteilt. Diese Unterteilung kann durch einen Bildlauf oder ein Scrollen nicht verändert werden. Durch einen Bedienvorgang kann nur festgelegt werden, welche der *n* Teilmengen angezeigt werden soll. Entsprechend der angezeigten Teilmenge wird das erste graphische Teilelement auf einer der *n* Positionen des zweiten graphischen Teilelements dargestellt wird.

Durch die von dem erfindungsgemäßen Verfahren bereitgestellte feste Unterteilung in *n* disjunkte Teilmengen kann der Nutzer durch einen Bedienvorgang schnell eine der gewünschten Teilmengen auswählen, ohne dass eine Feinjustierung zur Darstellung der gewünschten Teilmenge erforderlich ist, wie es bei einer herkömmlichen Bildlaufleiste durchgeführt wird. Des Weiteren kann der Betrachter durch die gestufte Positionierung des ersten graphischen Teilelements relativ zu dem zweiten graphischen Teilelement schnell erfassen, welche Teilmenge momentan angezeigt wird.

Durch die stufenlose Verschiebbarkeit des ersten graphischen Teilelements wird eine sehr intuitive und einfache Bedienung bei der Veränderung der anzuzeigenden Teilmenge bereitgestellt. Im Gegensatz zu der Bedienung einer herkömmlichen Bildlaufleiste ist es jedoch nicht erforderlich, dass der Nutzer zum Anzeigen der gewünschten Teilmenge das erste graphische Teilelement exakt positioniert, da eine Positionierung in einem bestimmten Bereich ausreicht, damit das erste graphische Teilelement automatisch in eine der *n* Positionen relativ zu dem zweiten graphischen Teilelement überführt wird und damit die gewünschte Teilmenge angezeigt wird. Diese Vereinfachung des Bedienvorgangs ist insbesondere dann vorteilhaft, wenn das Verfahren in Umgebungen eingesetzt wird, die eine schnelle Bedienung erforderlich machen, bei welcher die Aufmerksamkeit des Nutzers so wenig wie möglich in Anspruch genommen wird, wie es beispielsweise bei einem Einsatz in einem Kraftfahrzeug der Fall ist.

Die Ausdehnung des ersten graphischen Teilelements relativ zu dem zweiten graphischen Teilelement stellt die Anzahl der Objekte der momentan angezeigten Teilmenge relativ zu der Gesamtzahl der Objekte der Menge dar. Auf diese Weise kann der Nutzer schnell und intuitiv erfassen, wieviele der Objekte der Gesamtmenge momentan angezeigt werden.

Gemäß einer Weiterbildung des erfindungsgemäßen Verfahrens ist das zweite graphische Teilelement in n Segmente unterteilt. Die Segmente sind insbesondere gleichgroß. Sie werden beispielsweise beabstandet voneinander angezeigt. Die Ausdehnung des ersten graphischen Teilelements entspricht insbesondere der Ausdehnung eines Segments des zweiten graphischen Teilelements. Somit visualisiert sowohl die Größe eines Segments als auch die Größe des ersten graphischen Teilelements die Größe der angezeigten Teilmenge relativ zu der Gesamtmenge. Die *n* Positionen des zweiten graphischen Teilelements sind insbesondere so gewählt, dass bei jeder dieser Positionen das erste graphische Teilelement bei einer der *n* Positionen einem Segment überlagert dargestellt wird. Das erste graphische Teilelement kann jedoch durch die Farbe, die Transparenz oder die Flächenfüllung unterscheidbar von dem Segment dargestellt werden.

Gemäß einer Weiterbildung des erfindungsgemäßen Verfahrens sind die *n* Segmente als Schaltflächen ausgebildet. Durch Betätigen der Schaltflächen ist die anzuzeigende Teilmenge der Objekte auswählbar. Bei einer Veränderung der Teilmenge durch eine Auswahl eines Segments des zweiten graphischen Teilelements wird eine Animation ausgeführt, bei welcher das erste graphische Teilelement auf die entsprechende Position der n Positionen auf der Anzeigefläche bewegt wird. Ferner kann auch das erste graphische Teilelement als Schaltfläche ausgebildet sein, so dass es beispielsweise durch eine Cursorsteuerung oder mittels einer berührungsempfindlichen Oberfläche auf der Anzeigefläche verschoben werden kann.

Das erfindungsgemäße Verfahren wird insbesondere in einem Fahrzeug eingesetzt. In diesem Fall wird die die Geschwindigkeit des Fahrzeugs gemessen. Das erfindungsgemäße Verfahren kann nun an den Betrieb des Fahrzeugs angepasst werden, indem die Bewegung der graphischen Objekte auf der Anzeigefläche bei den Animationen des Verfahrens mittels der Steuervorrichtung an die Geschwindigkeit des Fahrzeugs angepasst wird. Bei dem erfindungsgemäßen Verfahren kann die Bewegung der graphischen Objekte somit speziell an die Situationen angepasst werden, in denen das Fahrzeug betrieben wird.

Die erfindungsgemäße Vorrichtung ist dadurch gekennzeichnet, dass die Objekte in n disjunkte Teilmengen unterteilt sind, wobei *n* eine natürliche Zahl ist, die größer als 2 ist. Die Steuervorrichtung steuert bei der erfindungsgemäßen Vorrichtung die Anzeigeeinrichtung so an, dass relativ zu dem zweiten graphischen Teilelement *n* Positionen definiert sind, und dass das erste graphische Teilelement nur bei einer dieser *n* Positionen anzeigbar ist, wenn kein Bedienvorgang zum Verändern der Teilmenge ausgeführt wird, wobei die Positionierung des ersten graphischen Teilelements auf einer der *n* Positionen darstellt, welche der *n* Teilmengen momentan angezeigt wird.

Die erfindungsgemäße Vorrichtung ist insbesondere so ausgebildet, dass sie das vorstehend beschriebene Verfahren insgesamt oder teilweise ausführen kann. Die erfindungsgemäße Vorrichtung weist somit auch dieselben Vorteile wie das vorgenannte erfindungsgemäße Verfahren auf.

Bei der erfindungsgemäßen Vorrichtung umfasst die Eingabeeinrichtung insbesondere eine berührungsempfindliche Oberfläche auf der Anzeigefläche.

Des Weiteren wird der von der Erfindung ein Fahrzeug mit einer solchen Vorrichtung bereitgestellt.

Im Folgenden wird ein Ausführungsbeispiel der Erfindung mit Bezug zu den Zeichnungen erläutert.
- Figur 1: zeigt schematisch den Aufbau eines Ausführungsbeispiels der erfindungsgemäßen Vorrichtung zum Anzeigen von Informationen,
- die Figuren 2-9: zeigen Darstellungen auf einer Anzeigefläche, die von der Vorrichtung erzeugt werden können,
- die Figuren 10-23: zeigen Darstellungen auf einer Anzeigefläche, die von einem Ausführungsbeispiel des erfindungsgemäßen Verfahrens erzeugt werden.

Die Vorrichtung zum Anzeigen von Informationen umfasst eine Anzeigeeinrichtung 1 mit einer Anzeigefläche 2. Die Anzeigefläche 2 kann von einem Display, insbesondere einem Flüssigkristalldisplay, beliebiger Bauart bereitgestellt werden. Ferner kann es sich bei der Anzeigeeinrichtung 1 um eine Projektionseinrichtung handeln, wie z. B. ein Head-up- oder Head-down-Display in einem Fahrzeug.

Die Anzeigeeinrichtung 1 ist mit einer Steuervorrichtung 3 datentechnisch gekoppelt. Die Steuervorrichtung 3 erzeugt Graphikdaten zur Informationsdarstellung auf der Anzeigefläche 2. Von der Steuervorrichtung 3 können nicht nur statische Anzeigebilder erzeugt werden, sondern insbesondere auch Animationen, die Übergänge zwischen verschiedenen Anzeigemodi durch eine Bewegung von graphischen Objekten visualisieren. Ferner können die Animationen Bewegungen einzelner graphischer Objekte in einem bestimmten Anzeigemodus betreffen oder die Bewegung eines graphischen Objekts von einer ersten Darstellung eines Anzeigemodus in eine zweite Darstellung. Bei den Animationen kann es sich insbesondere um so genannte Schlüsselbildanimationen handeln, bei denen die Einzelbilder zwischen zwei Schlüsselbildern einer Animation erzeugt werden, um den Eindruck einer flüssigen Veränderung zu erwecken. Die zwischen den Schlüsselbildern entstandenen Bilder werden auch als Inbetweens und das Erzeugen der Schlüsselbildanimation als Tweening bezeichnet. Zum Erzeugen der Graphikdaten und zum Ausführen der Animationen ist die Steuervorrichtung 3 mit einem Speicher 5 und einer Systemuhr 4 datentechnisch gekoppelt.

Des Weiteren ist eine Eingabeeinrichtung vorgesehen. Die Eingabeeinrichtung umfasst eine berührungsempfindliche Oberfläche, die separat von der Anzeigefläche 2 vorgesehen ist, so dass ein so genanntes Touchpad gebildet ist, oder die auf der Anzeigefläche 2 vorgesehen ist, so dass ein so genannter Touchscreen bereitgestellt wird. Des Weiteren kann die Eingabeeinrichtung, die das Touchpad oder den Touchscreen umfasst, eine Annäherungserfassungsvorrichtung umfassen, welche die Annäherung eines Betätigungselements, wie z. B. insbesondere die Fingerspitze eines Nutzers, an die berührungsempfindliche Oberfläche erfasst. In Abhängigkeit von der Annäherung eines solchen Betätigungselements an die berührungsempfindliche Oberfläche kann die angezeigte Information verändert werden.

Des Weiteren kann die Eingabeeinrichtung eine an sich bekannte Einrichtung zum Erfassen und Auswerten einer Geste eines Körperteils eines Nutzers sein. Beispielsweise kann die Hand eines Nutzers vor der Anzeigefläche 2 eine Geste ausführen. Die dreidimensionale Position der Hand in einem bestimmten Aufenthaltsbereich vor der Anzeigefläche 2 wird erfasst und als Eingabe interpretiert. In diesem Fall ist es nicht erforderlich, dass der Nutzer die Anzeigefläche 2 berührt.

Schließlich kann als Eingabeeinrichtung ein abgesetztes Bedienelement eingesetzt werden, insbesondere ein mechanisches Bedienelement. Bei dem mechanischen Bedienelement kann es sich um ein Drehsteller oder einen an sich bekannten Drehdrücksteller handeln. Mittels dieses Bedienelements sind graphische Objekte, die auf der Anzeigefläche 2 angezeigt werden, ansteuerbar, veränderbar und auswählbar.

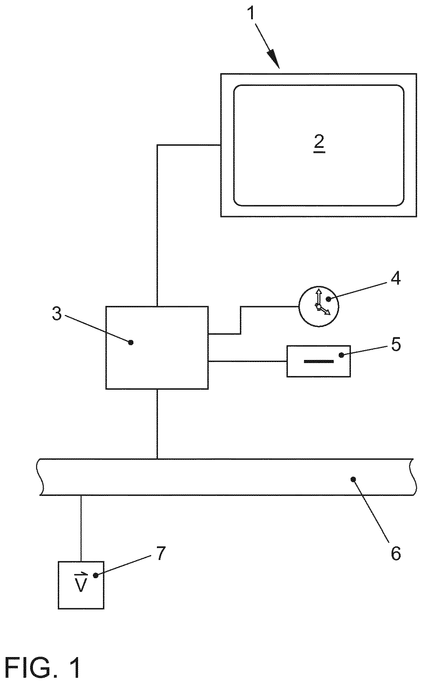

Die Steuervorrichtung 3 ist ferner mit weiteren Einrichtungen verbunden, welche der Steuervorrichtung 3 Daten für die Anzeige auf der Anzeigefläche 2 übermitteln. In dem in Fig. 1 gezeigten Ausführungsbeispiel wird die Vorrichtung in einem Fahrzeug, insbesondere einem Kraftfahrzeug, eingesetzt. Die Steuervorrichtung 3 ist in diesem Fall mit einem Datenbus 6 des Fahrzeugs verbunden. Der Datenbus 6 ist wiederum mit vielfältigen Einrichtungen im Fahrzeug gekoppelt, insbesondere mit einer Messvorrichtung 7 zum Messen der Geschwindigkeit des Fahrzeugs. Die aktuelle Fahrzeuggeschwindigkeit kann somit von der Messvorrichtung 7 über den Datenbus 6 an die Steuervorrichtung 3 übertragen werden.

Im Folgenden wird ein Verfahren erläutert, welches von der mit Bezug zu Fig. 1 beschriebenen Vorrichtung ausgeführt werden kann. In diesem Fall wird die Vorrichtung bzw. das Verfahren in einem Fahrzeug eingesetzt.

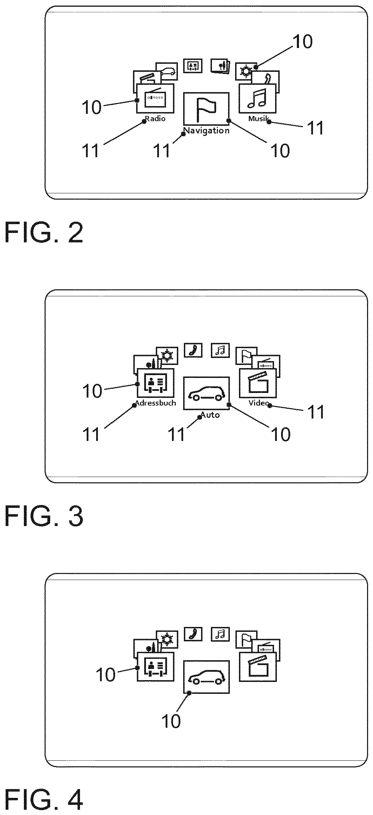

Die Informationen werden bei dem Verfahren in einer hierarchischen Struktur angezeigt. Ausgangspunkt für diese hierarchische Struktur ist die in Fig. 2 gezeigte Wiedergabe auf der Anzeigefläche 2. Es werden mehrere graphische Objekte 10 auf einem virtuellen, perspektivisch dargestellten Ring angeordnet dargestellt. Die perspektivische Darstellung zeigt den virtuellen Ring so, als ob der Betrachter von schräg oben auf den Ring schaut. Dabei wird ein graphisches Objekt 10 im Vordergrund in der perspektivischen Darstellung am größten dargestellt. Nach hinten werden weitere graphische Objekte 10, zum Teil von vor ihn befindlichen Objekten 10 verdeckt, dargestellt. Insgesamt werden neun oder mehr graphische Objekte 10 angezeigt.

Die graphischen Objekte 10 sind als Schaltflächen ausgebildet, so dass sie vom Nutzer mittels der Eingabeeinrichtung markiert bzw. ausgewählt werden können. Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche 2 erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Anzeigefläche erfolgen.

Die graphischen Objekte 10 umfassen Symbole, die dem Nutzer Hinweise auf die Funktion des Objekts geben. Ferner können zumindest einige graphische Objekte 10 Beschriftungen 11 aufweisen, welche die Funktion nochmals alphanumerisch erläutert. Bei der Darstellung der Objekte 10 auf dem perspektivisch gezeigten Ring werden insbesondere Beschriftungen 11 für die im Vordergrund dargestellten Objekte 10 wiedergegeben.

Der Nutzer kann mittels der Eingabeeinrichtung die Objekte 10 auf dem perspektivisch dargestellten Ring karussellartig drehen. Beispielsweise kann der Nutzer mittels der Eingabeeinrichtung beliebige graphische Objekte 10 in den Vordergrund bringen und auswählen. In Fig. 2 ist beispielsweise ein graphisches Objekt 10 im Vordergrund dargestellt, welches dem Navigationssystem eines Fahrzeugs zugeordnet ist, in Fig. 3 ist ein graphisches Objekt 10 im Vordergrund dargestellt, welches verschiedenen Anzeigen von Betriebsparametern des Fahrzeugs zugeordnet ist. Details zur Anzeige und Steuerung der graphischen Objekte 10 in dem Anzeigemodus, der in den Fig. 2 und 3 gezeigt ist, sind in der DE 10 2007 039 442 A1 beschrieben.

Bei dem erfindungsgemäßen Verfahren können die graphischen Objekte 11 jedoch nicht nur in dem in den Fig. 2 und 3 gezeigten ersten Anzeigemodus dargestellt werden. Es ist ein zweiter Anzeigemodus definiert, in dem dieselben graphischen Objekte 10 in einer anderen Art und Weise, d. h. in einem anderen Layout, angezeigt werden. Es hat sich nämlich herausgestellt, dass die Anzeige auf dem perspektivisch dargestellten Ring des ersten Anzeigemodus während der Fahrt im Fahrzeug vom Fahrer dann schwer erfasst und bedient werden kann, wenn mehr als acht graphische Objekte 10 dargestellt werden. Aus diesem Grund wird bei dem erfindungsgemäßen Verfahren der Anzeigemodus in Abhängigkeit von der Fahrzeuggeschwindigkeit automatisch ausgewählt. Bewegt sich das Fahrzeug in einem ersten Geschwindigkeitsbereich, werden die graphischen Objekte 10 in dem ersten Anzeigemodus angezeigt. Bewegt sich das Fahrzeug in einem anderen, zweiten Geschwindigkeitsbereich, werden die graphischen Objekte 10 in dem später beschriebenen zweiten Anzeigemodus dargestellt. Die beiden Geschwindigkeitsbereiche grenzen einander an, wobei eine Grenzgeschwindigkeit definiert ist. Wird diese Grenzgeschwindigkeit über- oder unterschritten, erfolgt automatisch ein Wechsel von dem einen Anzeigemodus in den anderen Anzeigemodus. Die Grenzgeschwindigkeit liegt beispielsweise in einem Bereich von 4 km/h bis 20 km/h, insbesondere in einem Bereich von 5 km/h bis 10 km/h und bevorzugt in einem Bereich von 5 km/h bis 8 km/h. Hier wurde ein Grenzwert für die Geschwindigkeit von 6 km/h gewählt.

Für den Übergang von dem einen Anzeigemodus in den anderen Anzeigemodus kann ferner eine Hysterese durchlaufen werden, die beispielsweise in einem Bereich von 2 km/h bis 5 km/h liegen kann. Ist beispielsweise bei einer Grenzgeschwindigkeit von 6 km/h eine Hysterese von 2 km/h definiert, wechselt der Anzeigemodus, wenn die Fahrzeuggeschwindigkeit 8 km/h überschreitet. Verringert sich daraufhin die Geschwindigkeit wieder, wechselt der Anzeigemodus jedoch erst wieder, wenn die Geschwindigkeit 4 km/h unterschritten hat. Steigt daraufhin die Fahrzeuggeschwindigkeit wieder, wird erneut erst bei einer Geschwindigkeit von 8 km/h der Anzeigemodus gewechselt. Für die Hysterese werden somit zwei Grenzgeschwindigkeiten oberhalb und unterhalb der mittleren Grenzgeschwindigkeit definiert.

Die Fahrzeuggeschwindigkeit wird fortwährend von der Messvorrichtung 7 an die Steuervorrichtung 3 übertragen. Wird der Grenzwert für die Fahrzeuggeschwindigkeit überschritten bzw. unterschritten, erzeugt die Steuervorrichtung 3 eine Animation für den Übergang von dem einen Anzeigemodus in den anderen Anzeigemodus. Die Anzeige auf der Anzeigefläche 2 verändert sich somit nicht abrupt, sondern in einem fließenden Übergang, so dass der Nutzer die Orientierung in der hierarchischen Anzeigestruktur behält.

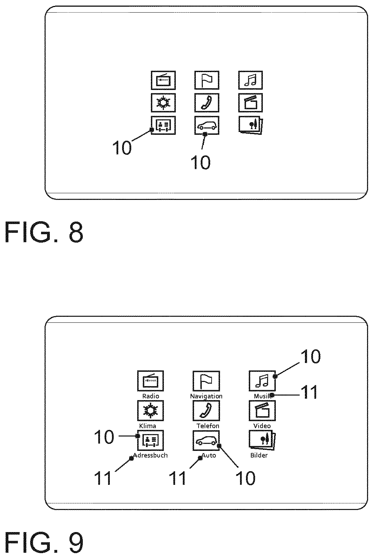

Im Folgenden wird mit Bezug zu den Fig. 3 bis 9 der Übergang von dem in Fig. 3 gezeigten ersten Anzeigemodus in den in Fig. 9 gezeigten zweiten Anzeigemodus erläutert:
Im Fahrzeug wird im Stehen die in Fig. 3 gezeigte Anzeige auf der Anzeigefläche 2 wiedergegeben. Der Fahrer setzt das Fahrzeug nun in Bewegung und überschreitet die Grenzgeschwindigkeit für den Übergang vom ersten Anzeigemodus in den zweiten Anzeigemodus. Dieses Überschreiten der Grenzgeschwindigkeit wird von der Steuervorrichtung 3 auf Basis der Daten von der Messvorrichtung 7 erfasst. Daraufhin erzeugt die Steuervorrichtung 3 eine Animation, d. h. eine Bewegung der graphischen Objekte 10, wie sie in den Fig. 4 bis 9 gezeigt ist.

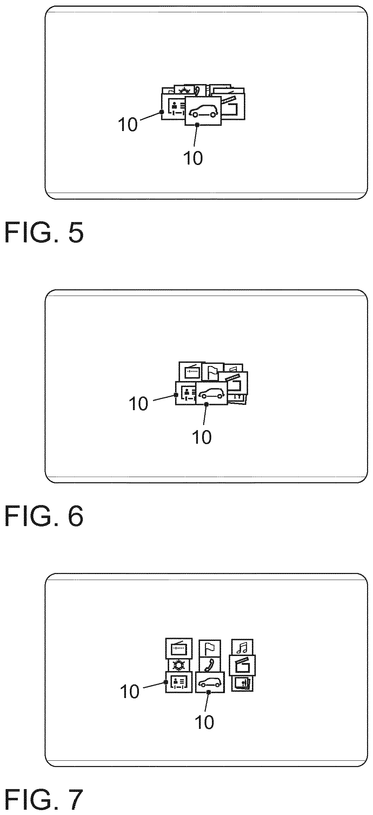

Zunächst verschwinden die Beschriftungen 11 der drei im Vordergrund dargestellten graphischen Elemente 10 (Fig. 4). Daraufhin bewegen sich die graphischen Objekte 10 aufeinander zu, wie dies in den Fig. 4 und 5 dargestellt ist, bis sie sich in einem zentralen Bereich der Anzeigefläche 2 vereinen. Am Ende dieser Vereinigung kann gegebenenfalls kurzzeitig eine inhaltsleere Anzeige auf der Anzeigefläche 2 wiedergegeben werden. Daraufhin werden die graphischen Objekte 10 wieder dargestellt. Sie bewegen sich nun voneinander weg in Richtung der Positionen der Darstellung in dem zweiten Anzeigemodus. Die Expansion der graphischen Objekte 10 ist in den Fig. 6 bis 9 gezeigt. Fig. 9 zeigt dabei den Endzustand der Anzeige in dem zweiten Anzeigemodus.

Die graphischen Objekte 10 werden im zweiten Anzeigemodus nebeneinander, überlappungsfrei in einem Raster dargestellt. Dabei ist jedem graphischen Objekt unabhängig von der Auswahl eines der graphischen Objekte eine feste Position in dem Raster zugeordnet. Ist die Bewegung der graphischen Objekte 10 in die Rasterdarstellung beendet, werden abschließend für alle graphischen Objekte 10 Beschriftungen 11 angezeigt.

In dem zweiten Anzeigemodus kann der Fahrer des Fahrzeugs alle graphischen Objekte 10 sehr schnell erfassen. Um ein bestimmtes Objekt 10 auszuwählen, wird somit sehr wenig Aufmerksamkeit vom Fahrer beansprucht, so dass er durch das Auswählen eines graphischen Objekts 10 nicht vom Fahrgeschehen abgelenkt wird. Die schnelle und intuitive Aufnahme der Information, wie sie im zweiten Anzeigemodus dargestellt wird, wird dadurch unterstützt, dass alle graphischen Objekte 10 überlappungsfrei in derselben Größe dargestellt werden. Ferner kann sich der Benutzer sehr einfach in der Rasterdarstellung orientieren, da die verschiedenen graphischen Objekte 10 einen festen Platz in dem Raster haben, den sich der Nutzer nach mehrmaliger Nutzung merken kann.

Unterschreitet das Fahrzeug danach wieder die Grenzgeschwindigkeit, gegebenenfalls unter Berücksichtigung der Hysterese, erzeugt die Steuervorrichtung 3 eine umgekehrte Animation von dem zweiten Anzeigemodus in den ersten Anzeigemodus. Dabei werden die graphischen Objekte 10 von der in Fig. 9 gezeigten Rasterdarstellung aufeinander zu bewegt, bis sie sich in dem zentralen Bereich vereinen und daraufhin wieder expandiert in Richtung der Positionen auf dem Ring, wie er in Fig. 2 oder 3 dargestellt ist. Auch bei dieser umgekehrten Animation werden die Beschriftungen 10 ausgeblendet und im Endzustand wieder eingeblendet. War in der Rasterdarstellung ein Objekt 10 markiert, wird dieses Objekt 10 in der Darstellung auf dem Ring des ersten Anzeigemodus im Vordergrund dargestellt.

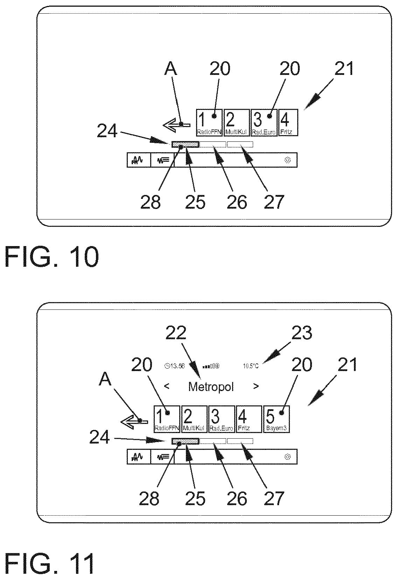

Mit Bezug zu den Fig. 9 bis 12 wird ein Verfahren erläutert, das auch von der mit Bezug zu Fig. 1 beschriebenen Vorrichtung ausgeführt werden kann. Die Vorrichtung und das Verfahren können in beliebigen Geräten, insbesondere in tragbaren Geräten, wie einem Musikspieler, einem Mobiltelefon oder einem mobilen Navigationssystem eingesetzt werden. Selbstverständlich ist auch der Einsatz in einem Fahrzeug möglich.

Das zweite Verfahren betrifft den Übergang von einer ersten Darstellung auf der Anzeigefläche 2 in eine zweite Darstellung auf der Anzeigefläche 2. Die erste Darstellung kann die Anzeige in dem ersten oder dem zweiten Anzeigemodus sein, wie sie in den Fig. 2, 3 und 9 gezeigt ist. Die zweite Darstellung betrifft beispielsweise den Kontext eines graphischen Objektes 10. Die zweite Darstellung wird insbesondere nach einer Auswahl eines graphischen Objekts 10 durch einen Nutzer mittels der Eingabeeinrichtung angezeigt. In diesem Fall wird somit ein anderer Informationsinhalt angezeigt und nicht nur ein verändertes Layout. Auch in diesem Fall wird jedoch kein abrupter Wechsel der Anzeige auf der Anzeigefläche 2 herbeigeführt, sondern ein fließender Übergang von der ersten Darstellung in die zweite Darstellung, wie es im Folgenden erläutert wird:
Wählt der Nutzer beispielsweise ausgehend von der Anzeige, wie sie in Fig. 9 gezeigt ist, das graphische Objekt 10 mit der Bezeichnung "Radio" aus, erzeugt die Steuervorrichtung 3 eine Animation, bei welcher die graphischen Objekte 10 nach außen voneinander weg bewegt werden. Kurzzeitig wird eine inhaltsleere Anzeige auf der Anzeigefläche 2 wiedergegeben. Daraufhin werden verschiedene andere graphische Objekte 20 der zweiten Darstellung auf der Anzeigefläche 2 zu ihrer Endposition hin bewegt. Wichtig bei dem zweiten Verfahren ist die Bewegung der neu angezeigten graphischen Objekte 20, insbesondere die Bewegung eines Hauptobjekts, welches als Blickfang für den Nutzer bei diesem Übergang dient.

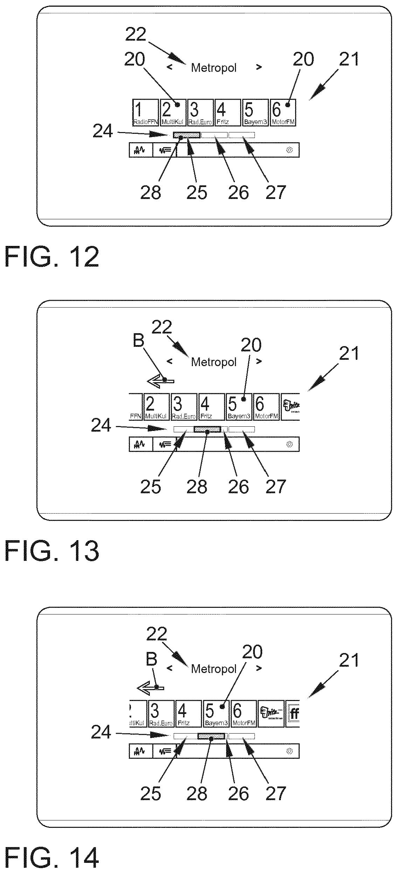

Der beschriebene Übergang wird für die Radiofunktion eine Leiste 21 in die Anzeigefläche 2 hineinbewegt. Diese Leiste 21 enthält mehrere graphische Objekte 20, welche einzelne Radiosender repräsentieren. Die Leiste 21 wird in einem bestimmten Bewegungsmuster bei diesem Übergang auf der Anzeigefläche 2 bewegt. Die Leiste 21 wird mit den graphischen Objekten 20 von rechts in Richtung des Pfeils A nach links bewegt. Dabei erscheinen immer mehr graphische Objekte 20, bis im Endzustand, wie in Fig. 12 gezeigt ist, insgesamt sechs graphische Objekte 20 auf der Leiste 21 dargestellt werden. Mit der Bewegung der Leiste 21 werden außerdem weitere Anzeigeelemente oder Schaltflächen 22, 23 und 24 eingeblendet.

Das Bewegungsmuster, welches die Leiste 21 ausführt, zeichnet sich dadurch aus, dass es einem Bewegungsmuster entspricht, welches in der zweiten Darstellung ausgeführt wird, wenn eines der graphischen Objekte 20 auf eine Eingabe mittels der Eingabeeinrichtung in der zweiten Darstellung bedient wird.

Der Nutzer kann z. B., um weitere graphische Objekte 20 für andere Radiosender zur Anzeige zu bringen, die graphischen Objekte 20 auf der Leiste 21 bewegen. Die Bewegung der graphischen Objekte 20 erfolgt dabei auch in Richtung des Pfeils A bzw. in entgegengesetzter Richtung. Beim Übergang von der ersten Darstellung in die zweite Darstellung wird dem Betrachter somit durch die Bewegung der Leiste 21 mit den graphischen Objekten 20 bereits vermittelt, wie die graphischen Objekte 20 in der zweiten Darstellung bewegt werden können. Die Art des Übergangs dient somit gleichzeitig als Bedienungsanleitung für die Betätigung von den graphischen Objekten 20 einer Liste in der zweiten Darstellungsart.

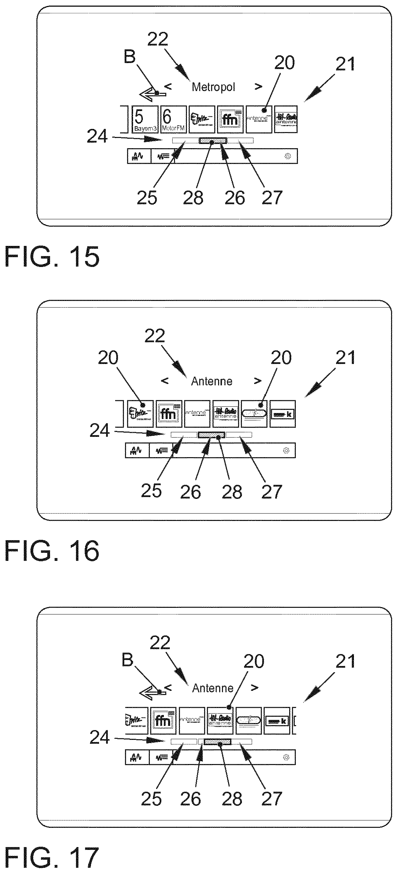

Wie in den Fig. 13 bis 19 gezeigt, kann der Nutzer nämlich die graphischen Objekte 20 beispielsweise mit einer Wischgeste in Richtung des Pfeils B bewegen, um die graphischen Objekte 20 nach links zu verschieben und andere graphische Elemente 20 für andere Radiosender zur Anzeige zu bringen. Im vorliegenden Fall enthält die Liste mit den Radiosendern insgesamt achtzehn Listeneinträge, denen jeweils ein graphisches Objekt 20 zugeordnet ist. Durch eine Wischgeste in Richtung des Pfeils B oder in entgegengesetzter Richtung kann der Nutzer die Anzeige der Listeneinträge entsprechend verändern. Das Bewegungsmuster dieser Bewegung in Richtung des Pfeils B bzw. in entgegengesetzter Richtung entspricht dabei dem Bewegungsmuster in Richtung des Pfeils A beim Übergang in die Darstellung der graphischen Objekte 20 für die Radiosender. Falls die Listeneinträge in einem anderen Bewegungsmuster verändert werden, beispielsweise in einer Schwenk- oder Drehbewegung, würde auch der Übergang in die zweite Darstellungsart mit den Radiosendern so erfolgen, dass die Liste mit den graphischen Objekten 20 in einer Schwenk- oder Drehbewegung auf der Anzeigefläche 2 hineinbewegt werden.

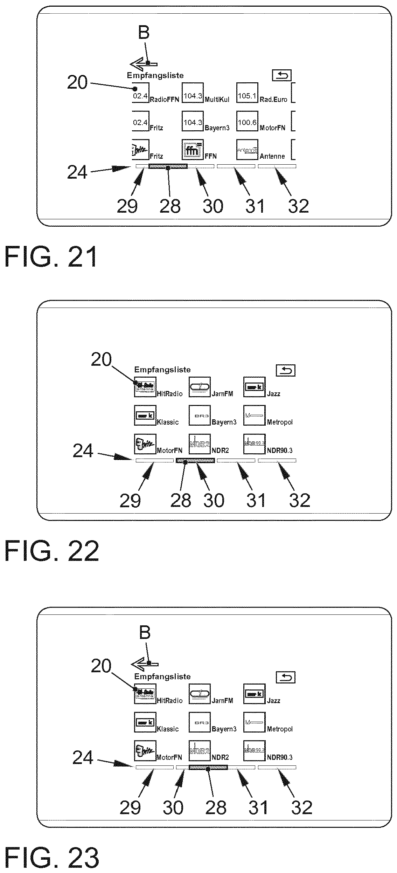

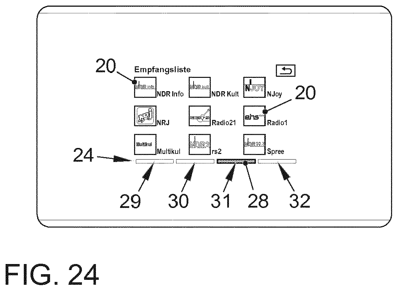

Mit Bezug zu den Fig. 12 bis 24 wird schließlich das erfindungsgemäße Verfahren erläutert, das auch von der mit Bezug zu Fig. 1 beschriebenen Vorrichtung ausgeführt werden kann. Auch das erfindungsgemäße Verfahren ist unabhängig von dem Einsatz im Fahrzeug. Es kann insbesondere auch in tragbaren Geräten eingesetzt werden.

Wie vorstehend erläutert können insgesamt achtzehn graphische Objekte 20, welche verschiedene Radiosender repräsentieren, auf der Anzeigefläche 2 dargestellt werden. Die Anzeigefläche 2 ist jedoch nicht groß genug, um alle achtzehn Objekte 20 gleichzeitig darzustellen. Es wird daher auf der Anzeigefläche 2 immer nur eine echte Teilmenge der Gesamtmenge der graphischen Objekte 20 angezeigt. Die angezeigte Teilmenge lässt sich durch einen Bedienvorgang, welcher mittels der Eingabeeinrichtung ausgeführt wird, verändern. Das erfindungsgemäße Verfahren betrifft ein Verfahren zum Bereitstellen einer Benutzerschnittstelle, bei welcher die angezeigte Teilmenge der Objekte 20 verändert werden kann und dem Nutzer visualisiert wird, welche Teilmenge innerhalb der Gesamtmenge momentan angezeigt wird.

Wenn auf einer Anzeigefläche 2 nur eine Teilmenge einer Menge mit einer Vielzahl von Objekten angezeigt wird, wird dem Betrachter herkömmlicherweise als graphisches Element eine so genannte Bildlaufleiste (Scrollbar) angezeigt. Eine solche Bildlaufleiste umfasst zwei graphische Teilelemente: zum einen wird eine Leiste angezeigt, deren Länge die Größe der Gesamtmenge repräsentiert, zum anderen wird eine Markierung auf der Leiste angezeigt, deren Länge die Größe der angezeigten Teilmenge repräsentiert und deren Position relativ zu der Leiste dem Betrachter visualisiert, wo sich die angezeigte Teilmenge innerhalb der Gesamtmenge befindet. Die angezeigte Menge ist in diesem Fall somit insbesondere einer bestimmten Ordnung unterworfen.

Bei dem erfindungsgemäßen Verfahren sind die Benutzerschnittstelle und die Art der Visualisierung wie folgt modifiziert:
Die graphischen Objekte 20 werden in *n* disjunkte Teilmengen unterteilt. Dabei ist *n* eine natürliche Zahl die größer als 2 ist. Im hier beschriebenen Ausführungsbeispiel umfasst die Gesamtmenge der graphischen Objekte 20 insgesamt achtzehn Objekte 20. Diese Gesamtmenge ist in drei disjunkte Teilmengen unterteilt: Die erste Teilmenge umfasst die graphischen Objekte 20 Nr. 1 bis 6, die zweite Teilmenge umfasst die graphischen Objekte 20 Nr. 7 bis 12 und die dritte Teilmenge umfasst die graphischen Objekte 20 Nr. 13 bis 18.

Wie in Fig. 12 gezeigt, befindet sich unterhalb der Anzeige der graphischen Objekte 20 für die Radiosender ein graphisches Element, welches in zwei Teilelemente unterteilt ist. Das erste graphische Teilelement ist eine modifizierte Leiste 24. Die Leiste 24 ist wiederum in insgesamt *n* Segmente unterteilt, die beabstandet voneinander angeordnet sind. Im vorliegenden Fall werden somit die drei Segmente 25, 26 und 27 angezeigt.

Des Weiteren wird als zweites graphisches Teilelement eine Markierung 28 angezeigt. Wenn kein Bedienvorgang zum Verändern der anzuzeigenden Teilmenge der graphischen Objekte 20 ausgeführt wird, wird die Markierung 28 immer deckungsgleich mit einem der Segmente 25, 26 oder 27 angezeigt. Wird die Markierung 28 auf dem Segment 25 angezeigt, wird dem Betrachter visualisiert, dass die graphischen Objekte 20 für die ersten sechs Radiosender angezeigt werden, wird die Markierung 28 auf dem Segment 26 angezeigt, wird dem Betrachter visualisiert, dass die graphischen Objekte 20 der zweiten sechs Radiosender angezeigt werden und wird die Markierung 28 auf dem Segment 27 angezeigt, wird dem Betrachter visualisiert, dass die graphischen Objekte 20 für die dritten sechs Radiosender angezeigt werden.

Durch einen Bedienvorgang verändert der Nutzer die angezeigte Teilmenge. Erfindungsgemäß umfasst die Eingabeeinrichtung eine berührungsempfindliche Oberfläche auf der Anzeigefläche 2. Die Teilmenge wird durch eine Wischgeste verändert. Ausgehend von der in Fig. 12 gezeigten Anzeige kann der Nutzer beispielsweise mit seiner Fingerspitze die Leiste 21 mit den graphischen Objekten 20 berühren und wie in den Fig. 13 bis 19 gezeigt, die Fingerspitze in Richtung des Pfeils B bewegen. Diese Bewegung der Fingerspitze auf der berührungsempfindlichen Oberfläche auf der Anzeigefläche 2 wird von der Steuervorrichtung 3 erfasst und die Steuervorrichtung 3 verändert daraufhin entsprechend die auf der Anzeigefläche 2 wiedergegebene Anzeige. Mit der Bewegung der Fingerspitze werden nämlich die graphischen Objekte 20 in Richtung des Pfeils B im Wesentlichen stufenlos verschoben. Entsprechend wird die Markierung 28 auf der Leiste 24 in entgegen gesetzter Richtung stufenlos verschoben, so dass die Markierung 28 dem Betrachter immer darstellt, welche Teilmengen bzw. welcher Ausschnitt der Leiste 21 mit den graphischen Objekten 20 momentan angezeigt wird.

Statt den Finger im Bereich der Leiste 21 in Richtung des Pfeils B zu bewegen, könnte der Nutzer auch die Anzeigefläche 2 im Bereich der Markierung 28 berühren und die Fingerspitze entsprechend in die andere Richtung bewegen, um die angezeigte Teilmenge mit den graphischen Objekten 20 auf der Leiste 21 zu verändern und gleichzeitig die Markierung 28 auf der Leiste 24 im Wesentlichen stufenlos zu verschieben.

Nach Abschluss des Bedienvorgangs wird - im Gegensatz zu einer herkömmlichen Bildlaufleiste - die Markierung 28 jedoch automatisch in Abhängigkeit von der Position der Markierung 28 relativ zu den Segmenten 25 bis 27 der Leiste 24 auf eines der Segmente 25, 26 oder 27 bewegt. Die Markierung 28 wird insbesondere auf das Segment 25, 26 oder 27 bewegt, mit welchem die größte Überdeckung beim Abschluss des Bedienvorgangs vorlag. Entsprechend verschiebt sich die Teilmenge mit den graphischen Objekten 20 derart, dass die erste Teilmenge angezeigt wird, wenn sich die Markierung 28 auf dem Segment 25 befindet, die zweite Teilmenge angezeigt wird, wenn sich die Markierung 28 auf dem Segment 26 befindet, und die dritte Teilmenge angezeigt wird, wenn sich die Markierung 28 auf dem Segment 27 befindet. Wenn der Bedienvorgang abgeschlossen wird, springt dabei nicht etwa die Markierung 28 auf das entsprechende Segment 25, 26 oder 27. Vielmehr wird eine Animation, insbesondere eine gedämpfte Bewegung, der Markierung 28 zu der Position ausgeführt. Gleichermaßen werden die Positionen der graphischen Objekte 20 bewegt, bis die entsprechende Teilmenge angezeigt wird.

Bei dem erfindungsgemäßen Verfahren sind die anzeigbaren Teilmengen somit im Voraus festgelegt. Sie sind durch den Bedienvorgang vom Nutzer nicht frei wählbar. Im vorliegenden Fall lassen sich beispielsweise nicht die graphischen Objekte 20 für die Radiosender Nr. 3 bis 8 gleichzeitig darstellen, nachdem der Bedienvorgang abgeschlossen wurde.

Anstatt einer Wischgeste kann der Nutzer auch ein bestimmtes Segment 25, 26 oder 27 der Leiste 24 antippen, um die Teilmenge zu verändern. Die Segmente 25 bis 27 sowie die Markierung 28 sind somit als so genannte Schaltflächen ausgebildet, welche vom Nutzer mittels der Eingabeeinrichtung betätigt werden können.

Die Ausdehnung der Markierung 28, d. h. im vorliegenden Fall insbesondere die Länge der Markierung 28, relativ zu der Ausdehnung bzw. Länge der Segmente 25, 26 und 27, stellt für den Betrachter intuitiv erkennbar die Anzahl der graphischen Objekte 20 der momentan angezeigten Teilmenge relativ zu der Gesamtzahl der graphischen Objekte der Menge dar. Um die Markierung 28 von den Segmenten 25 bis 27 unterscheiden zu können, kann die Markierung 28 beispielsweise in einer anderen Farbe, anderen Transparenz oder mit einer anderen Flächenfüllung dargestellt werden.

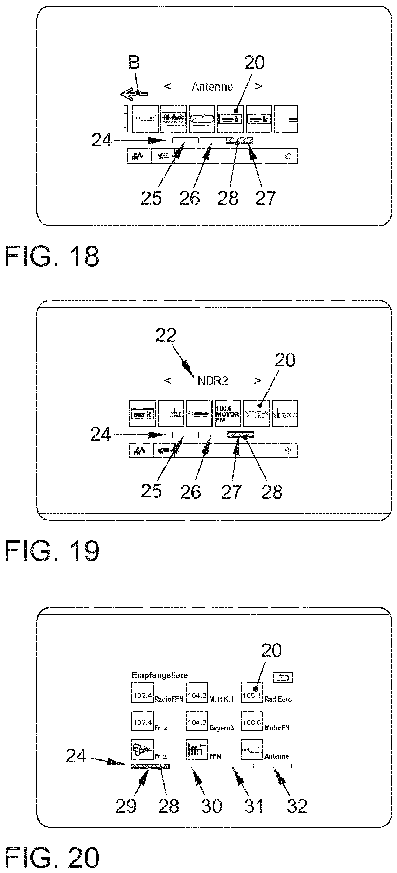

In den Fig. 20 bis 24 ist ein weiteres Beispiel des erfindungsgemäßen Verfahrens gezeigt:
Bei diesem Beispiel werden die graphischen Objekte 20 nicht auf einer linearen, eindimensionalen Leiste 21 angezeigt, sondern, wie in Fig. 20 gezeigt, in einem zweidimensionalen Raster. In diesem Fall umfasst die Gesamtmenge der graphischen Objekte 20 für die Radiosender insgesamt siebenundzwanzig graphische Objekte 20. Diese siebenundzwanzig graphischen Objekte 20 werden in vier Teilmengen mit jeweils neun graphischen Objekten 20 unterteilt. Entsprechend umfasst die Leiste 24 vier Segmente 29 bis 32. Auf der Leiste 24 wird wie vorstehend erläutert die Markierung 28 angezeigt. Wie in den Fig. 20 bis 24 gezeigt, kann der Nutzer mittels der Eingabeeinrichtung die angezeigte Teilmenge von den ersten neun graphischen Objekten 20 für die Radiosendern zu den dritten neun graphischen Objekten 20 für die Radiosender verschieben, indem er beispielsweise die Markierung 28 auf der Leiste 24 verschiebt. Wie vorstehend erläutert ist das Verschieben der Markierung 28 im Wesentlichen stufenlos möglich. Nach Abschluss des Bedienvorgangs wird die Markierung 28 und entsprechend die angezeigten graphischen Objekte 20 in einer Animation so bewegt, dass eine im Voraus festgelegte Teilmenge mit neun graphischen Objekten 20 angezeigt wird.

Es wird darauf hingewiesen, dass bei dem erfindungsgemäßen Verfahren, die Geschwindigkeit des Fahrzeugs, welche der Steuervorrichtung 3 von der Messvorrichtung 7 übertragen wird, Einfluss auf die Geschwindigkeit der Animationen der graphischen Objekte haben kann. Insbesondere ist es möglich, dass bei höheren Fahrzeuggeschwindigkeiten Animationen schneller ablaufen als bei niedrigen Fahrzeuggeschwindigkeiten. Bei höheren Fahrzeuggeschwindigkeiten betrachtet insbesondere der Fahrer nämlich die Anzeigefläche 2 nur für einen kürzeren Zeitraum ununterbrochen, als bei langsameren Fahrzeuggeschwindigkeiten. Durch diese Anpassung an die Fahrzeuggeschwindigkeit kann somit erreicht werden, dass der Fahrer unabhängig von der Fahrzeuggeschwindigkeit dieselbe Bewegungsstrecke bei der Animation wahrnimmt. Dies erleichtert es dem Fahrer sich bei der Veränderung des Anzeigeinhalts zu orientieren und den veränderten Informationsinhalt schnell und intuitiv zu erfassen. Die Parameter der Animationen für die Darstellung der Informationen können somit ein Merkmal des erfindungsgemäßen Verfahrens und der erfindungsgemäßen Vorrichtung darstellen, welches optional verwirklicht werden kann. Bei der Bestimmung dieser Parameter wird insbesondere berücksichtigt, wie ein Fahrer eines Fahrzeugs Informationen während der Fahrt besonders effektiv erfassen kann.

## Patentansprüche

1. Verfahren zum Bereitstellen einer Benutzerschnittstelle, bei dem
- eine echte Teilmenge einer Menge mit einer Vielzahl von Objekten (20) mittels einer Steuervorrichtung (3) von einer Anzeigeeinrichtung (1) anzeigbar ist,
- ein graphisches Element angezeigt wird, mittels welchem durch die relative Position eines ersten graphischen Teilelements (28), welches eine Markierung ist, zu einem zweiten graphischen Teilelement (24), welches eine Leiste ist, dargestellt wird, welche Teilmenge momentan angezeigt wird, und
- mittels eines Bedienvorgangs die angezeigte Teilmenge verändert wird, wobei die Objekte in *n* disjunkte Teilmengen unterteilt sind, wobei *n* eine natürliche Zahl ist, die größer als 2 ist, und wobei relativ zu dem zweiten graphischen Teilelement (24) *n* Positionen definiert sind und das erste graphische Teilelement (28) nur bei einer dieser *n* Positionen angezeigt wird, wenn kein Bedienvorgang zum Verändern der Teilmenge ausgeführt wird, wobei die Positionierung des ersten graphischen Teilelements (28) auf einer der *n* Positionen darstellt, welche der *n* Teilmengen momentan angezeigt wird,
- wobei bei dem Bedienvorgang eine Wischgeste in eine Richtung (B) auf einer berührungsempfindlichen Oberfläche auf einer Anzeigefläche (2) der Anzeigeeinrichtung (1) erfasst wird,
- wobei das erste graphische Teilelement (28) durch den Bedienvorgang entgegengesetzt der Richtung (B) der Wischgeste stufenlos relativ zu dem zweiten graphischen Teilelement (24) verschoben wird,
- wobei das zweite graphische Teilelement (24) in n Segmente (25, 26, 27) unterteilt ist, die beabstandet voneinander angeordnet sind und jedem Segment (25, 26, 27) eine der *n* Teilmengen zugeordnet ist,
- wobei nach dem Abschluss des Bedienvorgangs das erste graphische Teilelement (28) automatisch in Abhängigkeit von der Position des ersten graphischen Teilelements (28) beim Abschluss des Bedienvorgangs in eines der n Segmente (25, 26, 27) des zweiten graphischen Teilelements (24) überführt wird, so dass das erste graphische Teilelement (28) bei einer der n Positionen einem Segment (25, 26, 27) überlagert dargestellt wird, wobei die Überführung nach Abschluss des Bedienvorgangs fließend erfolgt,
- wobei die Objekte (20) in Richtung (B) der Wischgeste bewegt werden, bis die dem Segment (25, 26, 27) zugeordnete Teilmenge angezeigt wird, und
- wobei mit der Wischgeste die Objekte stufenlos verschoben werden.

2. Verfahren nach Anspruch 1,
wobei die Ausdehnung des ersten graphischen Teilelements (28) relativ zu dem zweiten graphischen Teilelement (24) die Anzahl der Objekte der momentan angezeigten Teilmenge relativ zu der Gesamtzahl der Objekte der Menge darstellt.

3. Verfahren nach Anspruch 2,
wobei die Ausdehnung des ersten graphischen Teilelements (28) der Ausdehnung eines Segments (25, 26, 27) des zweiten graphischen Teilelements (24) entspricht.

4. Verfahren nach einem der Ansprüche 1 bis 3,
wobei die *n* Segmente (25, 26, 27) als Schaltflächen ausgebildet sind, dass durch Betätigen der Schaltflächen die anzuzeigende Teilmenge der Objekte auswählbar ist, und dass bei einer Veränderung der Teilmenge durch eine Auswahl eines Segments (25, 26, 27) des zweiten graphischen Teilelements (24) eine Animation ausgeführt wird, bei welcher das erste graphische Teilelement (28) auf die entsprechende Position der *n* Positionen auf der Anzeigefläche (2) bewegt wird.

5. Vorrichtung zum Bereitstellen einer Benutzerschnittstelle mit
- einer Anzeigeeinrichtung (1) und
- einer Steuervorrichtung (3) zum Steuern der Anzeige der Anzeigeeinrichtung (1),
- wobei mittels der Steuervorrichtung (3) eine echte Teilmenge einer Menge mit einer Vielzahl von Objekten anzeigbar ist und ein graphisches Element anzeigbar ist, mittels welchem durch die relative Position eines ersten graphischen Teilelements (28), welches eine Markierung ist, zu einem zweiten graphischen Teilelement (24), welches eine Leiste ist, dargestellt wird, welche Teilmenge momentan angezeigt wird, und
- einer Eingabeeinrichtung, mittels welcher ein Bedienvorgang ausführbar ist, der die angezeigte Teilmenge verändert, wobei die Objekte in *n* disjunkte Teilmengen unterteilt sind, wobei *n* eine natürliche Zahl ist, die größer als 2 ist, und wobei die Steuervorrichtung (3) die Anzeigeeinrichtung (1) so ansteuert, dass relativ zu dem zweiten graphischen Teilelement (24) *n* Positionen definiert sind und das erste graphische Teilelement (28) nur bei einer dieser *n* Positionen anzeigbar ist, wenn kein Bedienvorgang zum Verändern der Teilmenge ausgeführt wird, wobei die Positionierung des ersten graphischen Teilelements (28) auf einer der n Positionen darstellt, welche der *n* Teilmengen momentan angezeigt wird
- wobei die Eingabeeinrichtung eine berührungsempfindliche Oberfläche auf der Anzeigefläche (2) umfasst, wobei die Steuervorrichtung (3) bei dem Bedienvorgang eine Wischgeste in eine Richtung (B) auf der berührungsempfindlichen Oberfläche erfasst,
- wobei das erste graphische Teilelement (28) durch den Bedienvorgang mittels der Eingabeeinrichtung entgegengesetzt der Richtung (B) der Wischgeste stufenlos relativ zu dem zweiten graphischen Teilelement (24) verschiebbar ist,
- wobei das zweite graphische Teilelement (24) in n Segmente (25, 26, 27) unterteilt ist, die beabstandet voneinander anordenbar sind und jedem Segment (25, 26, 27) eine der *n* Teilmengen zuordenbar ist,
- wobei nach dem Abschluss des Bedienvorgangs die Steuervorrichtung die Anzeigevorrichtung so ansteuert, dass das erste graphische Teilelement (28) automatisch in Abhängigkeit von der Position des ersten graphischen Teilelements (28) beim Abschluss des Bedienvorgangs in eines der n Segmente (25, 26, 27) des zweiten graphischen Teilelements (24) überführt wird, so dass das erste graphische Teilelement (28) bei einer der n Positionen einem Segment (25, 26, 27) überlagert dargestellt wird, wobei die Überführung nach Abschluss des Bedienvorgangs fließend erfolgt,
- wobei die Objekte (20) in Richtung (B) der Wischgeste bewegbar sind, bis die dem Segment (25, 26, 27) zugeordnete Teilmenge angezeigt wird, und
- wobei mit der Wischgeste die Objekte stufenlos verschoben werden.

6. Fahrzeug mit einer Vorrichtung nach Anspruch 5.

## Claims

1. Method for providing a user interface, in which
- a genuine subset of a set having a large number of objects (20) can be displayed by means of a control apparatus (3) by a display device (1),
- a graphical element is displayed which is used to present which subset is currently displayed by virtue of the relative position of a first graphical subelement (28), which is a marking, in relation to a second graphical subelement (24), which is a strip, and
- an operator control process is used to alter the displayed subset, wherein the objects are divided into *n* disjunct subsets, where *n* is a natural number which is greater than 2, and wherein *n* positions are defined relative to the second graphical subelement (24), and the first graphical subelement (28) is displayed only at one of these *n* positions if no operator control process for altering the subset is performed, wherein the positioning of the first graphical subelement (28) on one of the *n* positions presents which of the *n* subsets is currently displayed,
- wherein
during the operator control process a swipe gesture in a direction (B) on a touch-sensitive surface on a display panel (2) of the display device (1) is detected,
- wherein
the first graphical subelement (28) is displaced smoothly relative to the second graphical subelement (24) in the opposite direction to the direction (B) of the swipe gesture by the operator control process,
- wherein
the second graphical subelement (24) is divided into n segments (25, 26, 27) arranged at a distance from one another, and each segment (25, 26, 27) has one of the n subsets associated with it,
- wherein
following the conclusion of the operator control process the first graphical subelement (28) is automatically converted into one of the n segments (25, 26, 27) of the second graphical subelement (24) on the basis of the position of the first graphical subelement (28) at the conclusion of the operator control process, so that the first graphical subelement (28) is presented at one of the n positions in a form superimposed on a segment (25, 26, 27), the conversion taking place fluently following the conclusion of the operator control process,
- wherein
the objects (20) are moved in the direction (B) of the swipe gesture until the subset associated with the segment (25, 26, 27) is displayed, and
- wherein the swipe gesture prompts the objects to be displaced smoothly.

2. Method according to Claim 1,
the extent of the first graphical subelement (28) relative to the second graphical subelement (24) presents the number of objects in the currently displayed subset relative to the total number of objects in the set.

3. Method according to Claim 2,
wherein the extent of the first graphical subelement (28) corresponds to the extent of a segment (25, 26, 27) of the second graphical subelement (24).

4. Method according to one of Claims 1 to 3,
wherein the n segments (25, 26, 27) are in the form of buttons, in that operation of the buttons allows selection of the subset of the objects that is to be displayed, and in that an alteration in the subset as a result of selection of a segment (25, 26, 27) of the second graphical subelement (24) prompts the performance of an animation in which the first graphical subelement (28) is moved to the relevant position from the n positions on the display panel (2).

5. Apparatus for providing a user interface having
- a display device (1) and
- a control apparatus (3) for controlling the display on the display device (1),
- wherein the control apparatus (3) can be used to display a genuine subset of a set having a large number of objects and to display a graphical element which is used to present which subset is currently displayed by virtue of the relative position of a first graphical subelement (28), which is a marking, in relation to a second graphical subelement (24), which is a strip, and
- an input device which can be used to perform an operator control process which alters the displayed subset, wherein the objects are divided into *n* disjunct subsets, where *n* is a natural number which is greater than 2, and wherein the control apparatus (3) actuates the display device (1) such that *n* positions are defined relative to the second graphical subelement (24), and the first graphical subelement (28) can be displayed only at one of these n positions if no operator control process for altering the subset is performed, wherein the positioning of the first graphical subelement (28) on one of the n positions presents which of the *n* subsets is currently displayed,
- wherein
the input device comprises a touch-sensitive surface on the display panel (2), wherein during the operator control process the control apparatus (3) detects a swipe gesture in a direction (B) on the touch-sensitive surface,
- wherein
the first graphical subelement (28) is displacable smoothly relative to the second graphical subelement (24) in the opposite direction to the direction (B) of the swipe gesture by the operator control process by means of the input device,
- wherein
the second graphical subelement (24) is divided into n segments (25, 26, 27) arrangable at a distance from one another, and each segment (25, 26, 27) has one of the n subsets associable with it,
- wherein
following the conclusion of the operator control process the control apparatus actuates the display apparatus such that the first graphical subelement (28) is automatically converted into one of the n segments (25, 26, 27) of the second graphical subelement (24) on the basis of the position of the first graphical subelement (28) at the conclusion of the operator control process, so that the first graphical subelement (28) is presented at one of the n positions in a form superimposed on a segment (25, 26, 27), the conversion taking place fluently following the conclusion of the operator control process,
- wherein
the objects (20) are movable in the direction (B) of the swipe gesture until the subset associated with the segment (25, 26, 27) is displayed, and
- wherein the swipe gesture prompts the objects to be displaced smoothly.

6. Vehicle having an apparatus according to Claim 5.

## Revendications

1. Procédé de production d'une interface utilisateur, dans lequel
- une partie réelle d'un ensemble comportant une pluralité d'objets (20) peut être affichée par un dispositif d'affichage (1) au moyen d'un dispositif de commande (3),
- un élément graphique est affiché, celui-ci permettant d'indiquer la partie d'ensemble qui est momentanément affichée par la position relative d'un premier élément partiel graphique (28), qui est un marquage, par rapport à un deuxième élément partiel graphique (24), qui est une barre, et
- la partie d'ensemble affichée est modifiée par un processus de commande, dans lequel les objets sont subdivisés en *n* parties d'ensemble disjointes, dans lequel *n* est un nombre naturel supérieur à 2, et dans lequel *n* positions sont définies par rapport au deuxième élément partiel graphique (24) et le premier élément partiel graphique (28) est affiché seulement à l'une de ces *n* positions lorsqu'aucun processus de commande visant à modifier la partie d'ensemble n'est exécuté, dans lequel le positionnement du premier élément partiel graphique (28) à l'une des *n* positions représente celle des *n* parties d'ensemble qui est momentanément affichée,
- dans lequel, lors d'un processus de commande, un geste de glissement dans une direction (B) sur une surface tactile présente sur une surface d'affichage (2) du dispositif d'affichage (1) est détecté,
- dans lequel le premier élément partiel graphique (28) est décalé par le processus de commande en sens opposé à la direction (B) du geste de glissement sans à coups par rapport au deuxième élément partiel graphique (24),
- dans lequel le deuxième élément partiel graphique (24) est subdivisé en n segments (25, 26, 27) qui sont disposés de manière espacée les uns des autres et l'une des n parties d'ensemble est associée à chaque segment (25, 26, 27),
- dans lequel, après la fin du processus de commande, le premier élément partiel graphique (28) est automatiquement transféré vers l'un des n segments (25, 26, 27) du deuxième élément graphique (24) en fonction de la position du premier élément partiel graphique (28) à la fin du processus de commande, de manière à ce que le premier élément partiel graphique (28) soit représenté superposé à un segment (25, 26, 27) à l'une des n positions, dans lequel le transfert est effectué sans à-coups après la fin du processus de commande,
- dans lequel les objets (20) sont décalés dans la direction (B) du geste de glissement jusqu'à ce que la partie d'ensemble associée au segment (25, 26, 27) soit affichée, et
- dans lequel les objets sont décalés sans à-coups par le geste de glissement.

2. Procédé selon la revendication 1,
dans lequel l'extension du premier élément partiel graphique (28) par rapport au deuxième élément partiel graphique (24) représente le nombre des objets de la partie d'ensemble momentanément affichée par rapport à la totalité des objets de l'ensemble.

3. Procédé selon la revendication 2,
dans lequel l'extension du premier élément partiel graphique (28) correspond à l'extension d'un segment (25, 26, 27) du deuxième élément partiel graphique (24) .

4. Procédé selon l'une des revendications 1 à 3,
dans lequel les *n* segments (25, 26, 27) sont réalisés sous la forme de touches, les parties d'ensemble devant être affichées des objets peuvent être sélectionnées par actionnement des touches, et lors d'une modification de la partie d'ensemble, une sélection d'un segment (25, 26, 27) du deuxième élément partiel graphique (24) permet de réaliser une animation lors de laquelle le premier élément partiel graphique (28) est déplacé sur la surface d'affichage (2) vers la position correspondante parmi les n positions.

5. Dispositif de production d'une interface utilisateur, comportant
- un dispositif d'affichage (1) et
- un dispositif de commande (3) destiné à commander l'affichage effectué par le dispositif d'affichage (1),
- dans lequel une partie d'ensemble réelle d'un ensemble comportant une pluralité d'objets peut être affichée au moyen du dispositif de commande (3) et un élément graphique peut être affiché, celui-ci permettant d'indiquer la partie d'ensemble qui est momentanément affichée par la position relative d'un premier élément partiel graphique (28), qui est un marquage, par rapport à un deuxième élément partiel graphique (24), qui est une barre, et
- un dispositif de saisie, au moyen duquel il est possible de mettre en oeuvre un processus de commande qui modifie la partie d'ensemble affichée, dans lequel les objets sont subdivisés en *n* parties d'ensemble disjointes, dans lequel *n* est un nombre naturel supérieur à 2, et dans lequel le dispositif de commande (3) effectue la commande du dispositif d'affichage (1) de manière à ce que *n* positions soient définies par rapport au deuxième élément partiel graphique (24), et à ce que le premier élément partiel graphique (28) puisse être affiché seulement à l'une de ces *n* positions lorsqu'aucun processus de commande visant à modifier la partie d'ensemble n'est exécuté, dans lequel le positionnement du premier élément partiel graphique (28) à l'une des *n* positions représente celle des *n* parties d'ensemble qui est momentanément affichée,
- dans lequel le dispositif de saisie comprend une surface tactile présente sur la surface d'affichage (2), dans lequel le dispositif de commande (3), lors du processus de commande, détecte un geste de glissement dans une direction (B) sur la surface tactile,
- dans lequel le premier élément partiel graphique (28) peut être décalé par le processus de commande au moyen du dispositif de saisie en sens opposé à la direction (B) du geste de glissement sans à-coups par rapport au deuxième élément partiel graphique (24),
- dans lequel le deuxième élément partiel graphique (24) est subdivisé en n segments (25, 26, 27) qui peuvent être disposés de manière espacée les uns des autres et l'une des *n* parties d'ensemble peut être associée à chaque segment (25, 26, 27),
- dans lequel, après la fin du processus de commande, le dispositif de commande effectue la commande du dispositif d'affichage de manière à ce que le premier élément partiel graphique (28) soit automatiquement transféré vers l'un des n segments (25, 26, 27) du deuxième élément partiel graphique (24) en fonction de la position du premier élément partiel graphique (28) à la fin du processus de commande, de manière à ce que le premier élément partiel graphique (28) soit représenté superposé à un segment (25, 26, 27) à l'une des n positions, dans lequel le transfert est effectué sans à-coups après la fin du processus de commande,
- dans lequel les objets (20) peuvent être déplacés dans la direction (B) du geste de glissement jusqu'à ce que la partie d'ensemble associée au segment (25, 26, 27) soit affichée, et
- dans lequel les objets sont décalés sans à-coups par le geste de glissement.

6. Véhicule comportant un dispositif selon la revendication 5.
